# EUROPÄISCHE PATENTSCHRIFT

(11) **EP 1 667 490 B1**
(45) Veröffentlichungstag und Bekanntmachung des Hinweises auf die Patenterteilung: **08.10.2008**
(21) Anmeldenummer: 05110449.5
(22) Anmeldetag: 08.11.2005
(51) Int. Cl.: H05B 3/14, B05D 7/00, B05D 5/12

(54) **Kunststoffbauteil zum Erwärmen eines Fluids und Verfahren zu dessen Herstellung**
Plastic part for heating of a fluid and process for manufacturing it
Pièce en plastique pour chauffer un fluide et méthode pour sa fabrication

(30) Priorität: 11.11.2004 DE 102004054623
(43) Veröffentlichungstag der Anmeldung: 07.06.2006
(73) Patentinhaber: MANN+HUMMEL GmbH, 71638 Ludwigsburg (DE)
(72) Erfinder: Fasold, Michael, 71549, Auenwald (DE); Müller, Peter, 66113, Saarbrücken (DE)

(56) Entgegenhaltungen:
- US-A- 4 071 736
- US-A- 4 200 973

## Beschreibung

### Technisches Gebiet

Die Erfindung betrifft ein Kunststoffbauteil zur Erwärmung eines Fluids nach Anspruch 1, sowie ein Verfahren zur Herstellung eines Kunststoffbauteils nach Anspruch 3.

### Stand der Technik

Es ist bekannt, Kunststoffbauteile mit einer Beschichtung zu versehen, welche die Kratzfestigkeit erhöht. Weiterhin sind Beschichtungen bekannt, welche als Antischmutzbeschichtung auf Kunststoffoberflächen aufgebracht werden. Die im Stand der Technik bekannten Beschichtungen werden durch Sprühen, Tauchen oder Fluten aufgebracht. Die aufgebrachten Beschichtungen sind jedoch unter Einwirkung von elektrischer Spannung nicht stabil, wodurch das beschichtete Kunststoffbauteil nicht mehr geschützt ist und zerstört wird.

Aufgabe der Erfindung ist es ein Kunststoffbauteil zu schaffen, welches auch unter Einwirkung von elektrischer Spannung über eine geschützte Oberfläche verfügt. Diese Aufgabe wird durch die Merkmale der Ansprüche 1 und 4 gelöst.

### Offenbarung der Erfindung

Das erfindungsgemäße Kunststoffbauteil ist zur Erwärmung eines Fluids, insbesondere in Kraftfahrzeugen vorgesehen. Derartige Fluide können z. B. Öl, Kraftstoff, Wasser oder Kurbelgehäusegase sein. Das Kunststoffbauteil besteht zumindest teilweise aus einem elektrischleitfähigen Kunststoffkörper welches mit elektrischen Kontakten zur Spannungsversorgung verbunden ist. Ein derartiges Kunststoffkörper kann z. B. aus Polyamid, Polypropylen oder Polyphenylensulfid gebildet werden, wobei mindestens ein Zusatzstoff beigemischt wird, um die elektrische Leitfähigkeit zu erzeugen. Derartige Zusatzstoffe sind z. B. Graphitpulver, Karbonfasern oder Edelstahlfasern. Durch die Kontakte ist elektrische Energie in das Kunststoffbauteil einleitbar, wodurch sich das elektrisch leitfähige Polymer erwärmt. Diese Wärme dient dann dem Erwärmen des Fluids. Es können noch weitere Materialien, wie z. B. Metall-, Keramik- oder Kunststoffeinlagen von dem elektrischleitfähigen Polymer umschlossen sein, wobei diese Materialien z. B. zur Stabilisierung dienen können.

Das Kunststoffbauteil verfügt über eine Antiadhäsivbeschichtung, auf welche eine zusätzliche Beschichtung aufgebracht ist. Das Aufbringen der Antiadhäsivbeschichtung erfolgt über die im Stand der Technik bekannten Verfahren, wie z. B. Tauchen, Sprühen oder Fluten. Diese Antiadhäsivbeschichtung kann sehr hart bzw. stark vernetzt sein, wobei die Schichtdicke dünn, insbesondere zwischen 2 bis 15 µm, gewählt ist. Bei einer besonderen Ausführung liegt die Schichtdicke im Bereich von ca. 5µm. Die zur Aushärtung der Antiadhäsivbeschichtung erforderliche Temperatur kann sowohl durch eine Fremdbeheizung in z. B. einem Ofen, als auch durch eine Selbsterwärmung des Polymers erzeugt werden, wobei selbstverständlich auch eine Kombination beider Erwärmungsvarianten verwendet werden kann. Die Antiadhäsivbeschichtung ist für Wasser-, Kraftstoff- oder sonstige Medien dicht. Somit dient diese Antiadhäsivbeschichtung als Diffusionssperre für die Moleküle des Fluids. Die Antiadhäsivbeschichtung ist fest an das Polymer des Kunststoffbauteils angebunden. Somit sind Relativbewegungen der Antiadhäsivbeschichtung auf dem Polymer verhindert. Beim Erwärmen des Polymers dehnt sich der Werkstoff aus. Da die Antiadhäsivbeschichtung fest mit dem Polymer verbunden und die Schichtdicke sehr dünn ist, entstehen auch durch die Wärmeausdehnung des Polymers keine Beschädigungen an der Antiadhäsivbeschichtung. Somit wird ein Eindringen von Molekülen in das Polymer verhindert, wodurch die Lebensdauer und Funktion des Kunststoffbauteils sicher gestellt ist. Weiterhin wird eine Zersetzung des Polymers unter Einwirkung von elektrischer Spannung verhindert. Derartige Antiadhäsivbeschichtungen sind z. B. aus den deutschen Patentanmeldungen DE 100 32 631 oder DE 197 14 949 - insbesondere Beispiel 5 - bekannt. Diese Antiadhäsivbeschichtungen sind einerseits hochabriebfest und andererseits antiadhäsiv, so dass auf deren Oberfläche keine anderen Materialien haften. Obwohl die Antiadhäsivbeschichtung hochabriebfest ist, könnte durch mechanische Einwirkung, insbesondere beim Transport oder Einbau, eine Beschädigung der Oberfläche erfolgen. Daher muss die Antiadhäsivbeschichtung durch die Beschichtung vor mechanischen Einflüssen geschützt werden. Es ist überraschend, dass die Beschichtung auf die Oberfläche der Antiadhäsivbeschichtung aufbringbar ist, obwohl die Oberfläche für andere Medien abstoßend wirkt.

Zwischen der Antiadhäsivbeschichtung und der Beschichtung besteht keine mechanische Verbindung, wobei jedoch Bindungskräfte zwischen den Schichten existieren können. Die auf die Antiadhäsivbeschichtung aufgebrachte Beschichtung dient als zusätzliche Schutzhaut für die Antiadhäsivbeschichtung damit diese vor mechanischen und chemischen Beschädigungen geschützt ist. Hierbei kann die Beschichtung z. B. eine Dicke von 50 µm bis 500 µm aufweisen. Je nach Materialwahl kann die Dicke auch unter 50 µm bzw. über 500 µm liegen. Bevorzugte Materialien für die Beschichtung sind Harze, wie z. B. Epoxidharze oder Polyesterharze. Diese Materialien sind eine Mischung aus Harzen, Härter Füllstoffe und Beschleuniger, wie sie im Stand der Technik bekannt sind. Die Beschichtung verfügt außerdem über elektrisch isolierende Eigenschaften. Damit die Beschichtung durch das, das Kunststoffbauteil umgebende Fluid nicht beschädigt wird, ist die Beschichtung chemisch beständig. Moleküle, welche durch die Beschichtung hindurch dringen, werden dann durch die Antiadhäsivbeschichtung an dem Eindringen in den elektrisch leitfähigen Kunststoff gehindert. Weiterhin verfügt die Beschichtung über eine ausreichende Flexibilität, damit sich in der Beschichtung bei einer Wärmeausdehnung keine Risse bilden. Hierbei kann die Dehnung bis 50 % betragen. Vorzugsweise weist die Beschichtung eine Dehnung von 1 - 10 %, insbesondere 5 - 6 % auf. Das Kunststoffbauteil kann z. B. als elektrische Widerstandsheizung für Flüssigkeiten wie z. B. Kraftstoffe, Öle, Kühl- oder Temperiermedien oder auch für Gase wie z. B. Kurbelgehäusegase ausgestaltet sein. Durch die Beschichtung wird das Kunststoffbauteil vor Zerstörungen geschützt, wobei auch elektrische Spannungen an das Kunststoffbauteil angelegt werden können. Die Beschichtung schützt das Kunststoffbauteil vor Korrosion und Elektrolyse.

Gemäß der Erfindung ist die Antiadhäsivbeschichtung durch eine anorganische, nichtmetallische, insbesondere silikatische Basis erzeugt, wodurch eine sehr gute chemische und thermische Beständigkeit erreicht wird. Durch die silikatische Basis können Silikatverbindungen zwischen der Antiadhäsivbeschichtung und der weiteren Beschichtung, welche ebenfalls Silizium-Verbindungen enthält, ausgebildet werden.

Gemäß einer vorteilhaften Ausgestaltung ist die Beschichtung des Kunststoffbauteils im Wirbelsinterverfahren aufgebracht. Hierbei wird eine gleichmäßige, in sich geschlossene Schicht auf die Antiadhäsivbeschichtung aufgebracht. Die Herstellung derartiger Beschichtungen sind z. B. in der deutschen Patentanmeldung DE 199 63 376 beschrieben, wobei es überraschend ist, dass die pulverförmige Masse auf der Antiadhäsivbeschichtung haftet und nach dem Aufschmelzen und Erstarren eine geschlossene Schicht bildet.

Bei dem erfindungsgemäßen Verfahren zur Herstellung eines Kunststoffbauteils wird zuerst ein Kunststoffkörper hergestellt, wobei der Kunststoffkörper zumindest teilweise aus einem elektrisch leitfähigen Polymer, wie oben beschrieben, besteht. Dieser Kunststoffkörper kann z. B. durch Spritzgießen, Pressen oder Sintern erzeugt werden. Um Energie in den Kunststoffkörper einzubringen, sind elektrische Kontakte mit dem Polymer verbunden. Auf den Kunststoffkörper wird eine Antiadhäsivbeschichtung aufgebracht, welche für Fluidmoleküle wie z. B. Wasserdampfmoleküle, undurchlässig ist. Die Antiadhäsivbeschichtung verfügt über eine Oberfläche, die für Fluide oder sonstige Medien eine abstoßende Wirkung besitzen. Derartige Antiadhäsivbeschichtungen sind z. B. aus den deutschen Patentanmeldungen DE 100 32 631 oder DE 197 14 949 - insbesondere Beispiel 5 - bekannt. Auf diese Antiadhäsivbeschichtung wird eine weitere Beschichtung im Wirbelsinterverfahren aufgebracht. Hierbei wird der mit der Antiadhäsivbeschichtung versehene Kunststoffkörper in ein Wirbelsinterbett getaucht, in welchem ein entsprechendes Beschichtungspulver enthalten ist. Hierbei ist es überraschend, dass das Beschichtungspulver die Oberfläche der Antiadhäsivbeschichtung gleichmäßig bedeckt. Durch die eingeleitete Reaktionsenergie schmilzt das Beschichtungspulver auf, wodurch eine gleichmäßige geschlossene Beschichtungsschicht gebildet wird. Nach dem Abkühlen härtet die Beschichtungsschicht aus und schrumpft auf die Antiadhäsivbeschichtung auf und bildet eine verschleißfeste Schutzschicht um die Antiadhäsivbeschichtung. Die Beschichtung verfügt jedoch über keine direkte mechanische bzw. chemische Verbindung mit der beschichteten Antiadhäsivbeschichtung.

Gemäß einer vorteilhaften Ausgestaltung des Verfahrens wird die zur Aushärtung der Beschichtung erforderliche Reaktionswärme durch eine Fremdheizung und/oder durch eine Selbsterwärmung des Kunststoffkörpers erzeugt. Die Fremdwärme kann durch einen Ofen oder durch Strahlungen, insbesondere Infrarotstrahlungen zugeführt werden. Die Selbsterwärmung des Kunststoffkörpers kann durch in den Kunststoffkörper integrierte Kontaktelemente, Leitstäbe oder -schlangen erfolgen. Hierzu müssen lediglich entsprechende Kontakte vorgesehen sein. Das Einleiten der Reaktionswärme über die Kontakte ist besonders vorteilhaft, da hierbei die Wärme ohne Verlust direkt über die zu behandelnde Fläche eingeleitet wird und die Funktionsfähigkeitsprüfung der Heizung bereits zu einem frühen Fertigungsstadium erfolgt.

### Zeichnungen

Weitere Einzelheiten der Erfindung werden nachfolgend anhand schematischer Ausführungsbeispiele erläutert. Hierbei zeigt
- Figur 1: einen Ausschnitt aus einem erfindungsgemäßen Kunststoffbauteil,
- Figur 2: ein Heizelement für Flüssigkeiten im Schnitt und
- Figur 3: ein Heizelement für Kurbelgehäusegase.

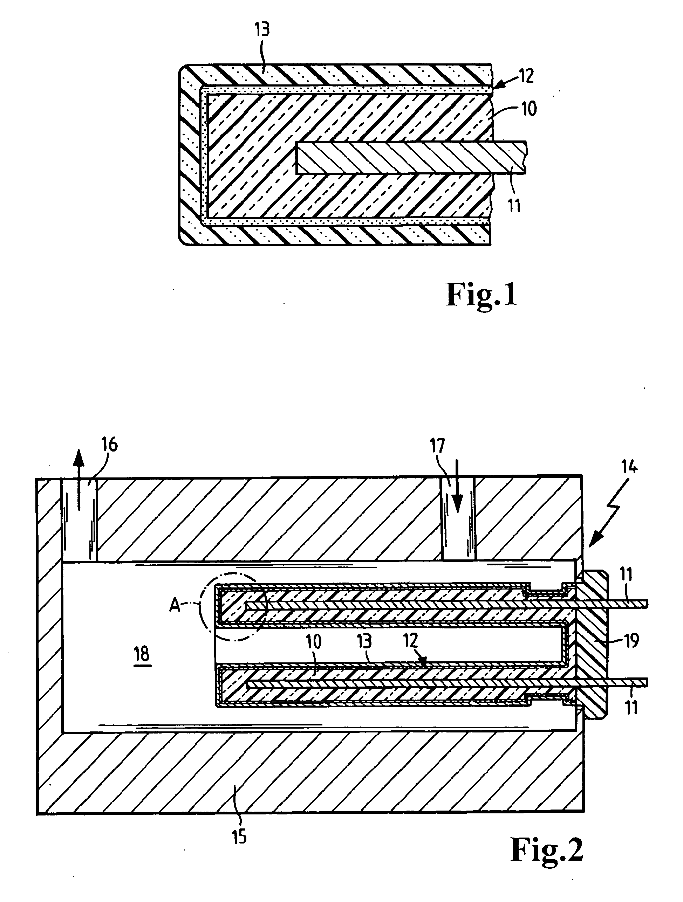

In Figur 1 ist ein Ausschnitt aus einem Kunststoffbauteil im Schnitt dargestellt. Das Kunststoffbauteil verfügt über einen Kunststoffkörper 10, welcher aus einem, durch Zugabe von Graphitpulver, elektrisch leitfähigen Polyamid 6 besteht. Zur Verbesserung der mechanischen Festigkeit können noch Glasfasern mit einem Anteil von bis zu 30 % beigemischt sein. Der Kunststoffkörper 10 ist mit einem elektrischen Kontakt 11 verbunden, um elektrische Energie auf den Kunststoffkörper 10 zu übertragen. Der Kunststoffkörper 10 ist somit elektrisch erwärmbar. Auf dem Kunststoffkörper 10 ist eine 4 bis 5 µm dicke Antiadhäsivbeschichtung 12 angeordnet, welche aus Antiadhäsivcoatings der Firma FEW-Chemicals, Deutschland, besteht. Diese Antiadhäsivbeschichtung 12 ist durch ihre Struktur gasdicht, wobei keine Moleküle von umgebenden Fluiden hindurch dringen können. Weiterhin ist die Oberfläche der Antiadhäsivbeschichtung 12 derart ausgestaltet, dass ein Anlagern anderer Materialien an die Antiadhäsivbeschichtung 12 verhindert wird. Diese Antiadhäsivbeschichtung 12 ist mit einer Beschichtung 13 überzogen, wobei die Beschichtung 13 ein Epoxidharz ist, welches Silizium enthält. Die Beschichtung 13 ist durch ein Wirbelsinterverfahren erzeugt, wobei die in dem Wirbelsinterbett enthaltenen Beschichtungspartikel des Epoxidharzes auf der Oberfläche der Antiadhäsivbeschichtung 12 aufschmelzen. Durch die Schmelzwärme werden die Moleküle der Antiadhäsivbeschichtung 12 derart aktiviert, dass sie die Beschichtung 13 nicht abstoßen, sondern Siliziumverbindungen ausbilden. Nach dem Abkühlen der Beschichtung 14 ist diese fest auf der Antiadhäsivbeschichtung 12 aufgeschrumpft. Da diese Beschichtung 13 ca. 500 µm dick ist, schützt die Beschichtung 13 die Antiadhäsivbeschichtung 12 vor mechanischen Beschädigungen, wie sie beim Transport oder Einbau des Kunststoffbauteils vorkommen können.

In Figur 2 ist ein Heizelement 14 für Flüssigkeiten oder Gase im Schnitt dargestellt. Dieses Heizelement 14 ist in einem Fluidbehälter 15 angeordnet, welcher über einen Auslass 16 und einen Einlass 17 verfügt. Der Auslass 16 ist über einen Heizraum 18 mit dem Einlass 17 korrespondierend verbunden. Damit das zu erwärmende Fluid nicht aus dem Heizraum 18 unkontrolliert austreten kann, ist eine Verschlusskappe 19 vorgesehen, welche dichtend mit dem Fluidbehälter 15 verbunden ist. Das Heizelement 14 verfügt über einen elektrisch leitfähigen Kunststoffkörper 10, wie er in Figur 1 beschrieben ist. Dieser Kunststoffkörper 10 ist von der Antiadhäsivbeschichtung 12 und der Beschichtung 13 gemäß Figur 1 umgeben, so dass der elektrisch leitfähige Kunststoff elektrisch isoliert ist. Die Kontakte 11 kontaktieren den Kunststoffkörper 10 großflächig, damit eine gleichmäßige Erwärmung des Kunststoffkörpers 10 erfolgt und somit das Fluid erwärmt wird. Weiterhin durchragen die Kontakte 11 die Verschlusskappe 19 damit Energie von einer Spannungsquelle zuführbar ist. Der strichpunktierte Ausschnitt A entspricht im Wesentlichen der Darstellung gemäß Figur 1.

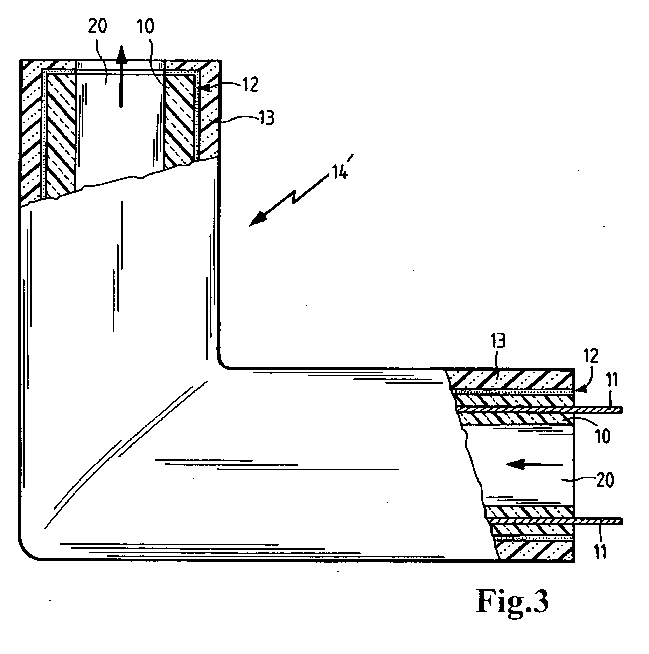

In Figur 3 ist ein Heizelement 14' für Kurbelgehäusegase dargestellt. Der Schichtaufbau des Heizelementes 14' entspricht dem in Figur 1 dargestellten Schichtaufbau, weshalb gleiche Bauteile mit gleichen Bezugszeichen versehen sind. Dieses Heizelement 14' ist als geknicktes Rohr dargestellt, welches in seinem Inneren über einen Strömungsquerschnitt 20 verfügt. Der Strömungsquerschnitt 20 kontaktiert direkt den elektrisch leitfähigen Kunststoffkörper 10, wodurch die durchgeleiteten Gase erwärmt werden und ein Vereisen verhindert wird. Das Heizelement 14' ist mit den Kontakten 11 auf eine Öffnung des Kurbelgehäuses (nicht dargestellt) aufsteckbar. Durch die Beschichtungen 12 und 13 wird der Kunststoffkörper 10 vor dem Kontakt mit schädlichen Fluiden geschützt.

## Patentansprüche

1. Kunststoffbauteil zum Erwärmen eines Fluids, insbesondere in Kraftfahrzeugen, welches zumindest teilweise aus einem elektrisch leitfähigen Kunststoffkörper besteht, welches mit elektrischen Kontakten (11) korrespondierend verbunden ist, wobei der Kunststoffkörper über eine gasdichte Antiadhäsivbeschichtung (12) verfügt, auf welche eine weitere Beschichtung (13) aufgebracht ist, wobei diese weitere Beschichtung (13) ebenfalls ein Polymer, insbesondere ein Harz, ist, welches über elektrisch isolierende Eigenschaften verfügt, **dadurch gekennzeichnet, dass** die Antiadhäsivbeschichtung (12) durch eine anorganische, nichtmetallische, insbesondere silikatische Basis erzeugt ist.

2. Kunststoffbauteil nach Anspruch 1, **dadurch gekennzeichnet, dass** die weitere Beschichtung (13) im Wirbelsinterverfahren aufgebracht ist.

3. Verfahren zur Herstellung eines Kunststoffbauteils zum Erwärmen eines Fluids nach einem der vorangehenden Ansprüche, aufweisend zumindest die Arbeitsschritte:
- Herstellen eines Kunststoffkörpers (10), wobei der Kunststoffkörper (10) zumindest teilweise aus einem elektrisch leitfähigen Polymer besteht;
- Verbinden des Kunststoffkörpers (10) mit elektrischen Kontakten (11);
- Aufbringen einer Antiadhäsivbeschichtung (12) auf den Kunststoffkörper (10);
- Aufbringen einer elektrisch isolierenden Beschichtung (13) auf die Antiadhäsivbeschichtung (12) im Wirbelsinterverfahren;
- Aushärten der Beschichtung (13), wobei die erforderliche Reaktionswärme zugeführt wird.

4. Verfahren nach Anspruch 3, **dadurch gekennzeichnet, dass** die zur Aushärtung der Beschichtung (13) erforderliche Reaktionswärme durch eine Fremdheizung und/oder durch eine Selbsterwärmung des Kunststoffkörpers (10) erzeugt wird.

## Claims

1. Plastic component for heating a fluid, in particular in motor vehicles, which at least partially consists of an electroconductive plastic body, which is correspondingly connected with electric contacts (11), the plastic body having a gas-tight anti-adhesive coating (12) to which another coating (13) is applied, this other coating (13) being also a polymer, in particular a resin, which has electrically insulating properties, **characterized in that** the anti-adhesive coating (12) is generated by an inorganic, non-metallic, in particular siliceous base.

2. Plastic component according to claim 1, **characterized in that** the other coating (13) is applied by fluidized bed sintering.

3. Method for manufacturing a plastic component for heating a fluid according to one of the above claims, featuring at least the following procedures:
- manufacturing a plastic body (10), the plastic body (10) consisting at last partially of an electroconductive polymer;
- connecting the plastic body (10) with electric contacts (11);
- applying an anti-adhesive coating (12) to the plastic body (10);
- applying an electrically insulating coating (13) to the anti-adhesive coating (12) by fluidized bed sintering;
- hardening of the coating (13), the required heat of reaction being supplied.

4. Method according to claim 3, **characterized in that** the heat of reaction required for hardening the coating (13) is generated by an external heater and/or by self-heating of the plastic body (10).

## Revendications

1. Composant en matière plastique destiné à chauffer un fluide, notamment dans des véhicules automobiles, composé au moins en partie d'un corps électroconducteur en matière plastique qui est relié en conséquence avec des contacts électriques (11), le corps en matière plastique disposant d'un revêtement anti-adhésif étanche aux gaz (12) sur lequel un autre revêtement est appliqué, cet autre revêtement (13) étant lui aussi un polymère, en particulier une résine, disposant de propriétés électroisolantes, **caractérisé en ce que** le revêtement anti-adhésif (12) est généré par une base inorganique, non métallique, notamment une base constituée de silicate.

2. Composant en matière plastique selon la revendication 1, **caractérisé en ce que** l'autre revêtement (13) est appliqué par frittage en lit fluidisé.

3. Procédé de fabrication d'un composant en matière plastique destiné à chauffer un fluide selon une des revendications précédentes, prévoyant au moins les opérations suivantes :
- fabrication d'un corps en matière plastique (10), ce corps en matière plastique (10) étant constitué au moins en partie d'un polymère électroconducteur ;
- connexion du corps en matière plastique (10) à des contacts électriques (11) ;
- application d'un revêtement anti-adhésif (12) sur le corps en matière plastique (10) ;
- application par frittage en lit fluidisé d'un revêtement électroisolant (13) sur le revêtement antiadhésif (12) ;
- durcissement du revêtement (13) avec apport de la chaleur de réaction nécessaire.

4. Procédé selon la revendication 3, **caractérisé en ce que** la chaleur de réaction nécessaire au durcissement du revêtement (13) est générée par un chauffage externe et/ou par un autoéchauffement du corps en matière plastique (10).
